# EUROPEAN PATENT SPECIFICATION

(11) **EP 1 506 519 B1**
(45) Date of publication and mention of the grant of the patent: **14.03.2007**
(21) Application number: 03728435.3
(22) Date of filing: 17.04.2003
(51) Int. Cl.: G06K 9/20

(54) **SYSTEM AND METHOD FOR DIGITAL IMAGE SELECTION**
SYSTEM UND VERFAHREN ZUR DIGITALEN BILDAUSWAHL
SYSTEME ET PROCEDE DE SELECTION D'IMAGES NUMERIQUES

(30) Priority: 22.05.2002 US 155592
(43) Date of publication of application: 16.02.2005
(73) Proprietor: Sony Computer Entertainment America, Inc., Foster City, CA 94404 (US)
(72) Inventor: Chatani, Masayuki, Foster City, CA 94404 (US); Dixit, Rajesh, Minato-ku, Tokyo 107-0052 (JP)
(74) Representative: Turner, James Arthur
(86) International application number: PCT/US2003/011982
(87) International publication number: WO 2003/100712

(56) References cited:
- EP-A- 1 202 187
- EP-A- 1 209 589
- WO-A-00/05875
- US-A- 6 167 469
- DATABASE WPI Section EI, Week 200173 Derwent Publications Ltd., London, GB; Class T01, AN 2001-631762 XP002246988 & JP 2001 230992 A (COPAL CO LTD), 24 August 2001 (2001-08-24)
- DATABASE WPI Section EI, Week 200267 Derwent Publications Ltd., London, GB; Class W04, AN 2002-621863 XP002246989 & JP 2002 125143 A (CANON KK), 26 April 2002 (2002-04-26)
- DATABASE WPI Section EI, Week 199937 Derwent Publications Ltd., London, GB; Class T01, AN 1999-434613 XP002246990 & JP 11 175533 A (FUJI PHOTO FILM CO LTD), 2 July 1999 (1999-07-02)

## Description

### BACKGROUND OF THE INVENTION

### 1. Field of the Invention

This invention relates generally to digital camera technology, and more particularly to digital image selection and searching techniques.

### 2. Description of the Related Art

Currently, image capturing technology is progressing toward digital image technology. This shift in technology is particularly evident in the area of personal camera photography. Traditional cameras using conventional film are increasingly giving way to modem digital cameras, which electronically store digital images using computer memory. In addition to the differences in image storage, traditional and digital cameras also differ in usage.

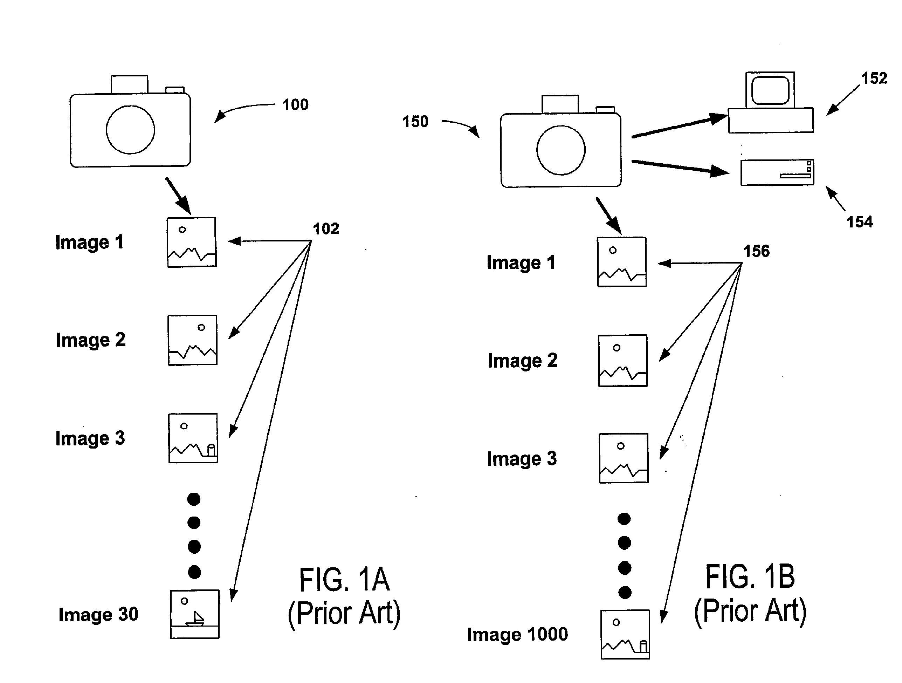

For example, Figure 1A illustrates a traditional camera 100. In use, the traditional camera 100 records photographs on film, which allows a limited number of exposures before needing replacement. For example, in Figure 1A, the traditional camera 100 includes film for 30 exposures. Once all the exposures are used for a given roll of film, the user generally develops the film, and generates photographs 102. At this point, the user can select the desired images and disregard undesired images. Since the number of photographs 102 is limited, for example to about 20-30 photographs 102, the task of selecting particular photographs is relatively easy. For example, the user may want to use only photographs that are in focus. I n this case, the task of selecting only in focus photographs 102 from 20-30 photographs is relatively simply. However, when using a digital camera, this selection process can be more difficult.

Figure 1B illustrates a digital camera 150. Unlike the traditional camera 100, the digital camera 150 records digital images 156 in memory. Moreover, the digital photographs 156 can be downloaded from the digital camera memory to additional memory. For example, the digital photographs 156 can be downloaded from the digital camera memory to a personal computer 152, or other computer system, such as a SONY PLAYSTATION 2 154, which is capable of storing digital images.

Generally, the digital camera memory can store far more images than a single roll of film. For example, a digital camera having 1 gigabyte of flash memory, or a microdrive, can store about one thousand photographs 156. Although some low end digital cameras allow only one shot per second, many high end digital cameras allow about eight shots per second. For example, a photographer can hold the shutter button down for three seconds and obtain about twenty-four photographs. At such a high rate of photography, it is relatively easy for a photographer to fill the digital camera memory with digital images 156. Unfortunately, selecting preferred images from one thousand photographs 156 is a laborious task.

For example, when the user desires to use only photographs that are in focus, the user is required to search through about one thousand digital photographs 156 to find the "in focus" photographs. In addition, once the desired digital photographs are selected, users often edit the digital photographs 156 using image editors. For example, color filters may be applied to the photographs, or the image contrast may be altered. Again, since digital cameras can store such a vast number of photographs, editing the large number of photographs can require a large amount of time and effort on the part of the photographer.

WO-A-00/05875 (Anderson) discloses the ability to attach to an image tags from a predetermined set, enabling limited searching by use of these tags as search criteria.

In view of the foregoing, there is a need for systems and methods for automatic selection of digital photographs based on user provided criteria. The methods should allow a user to provide parameters by which digital images can be sorted and selected. In addition, the methods should allow users to preview images under various conditions. For example, the user should be able to preview a particular image rotated, to provide the optimal orientation of the photograph, or the user should be able to preview a photograph with a particular filter applied, such as a "black and white" filter.

### SUMMARY OF THE INVENTION

Various respective aspects of the invention are defined in the appended claims.

Broadly speaking, the present invention fills these needs by allowing a user to select and preview digital images by providing a plurality of parameters indicating desired image properties. The parameters are utilized to filter the digital images, resulting in a smaller selection of images that share the given properties. In one embodiment, a method is disclosed for digital image selection. Image selection parameters are obtained, where the image selection parameters define specific properties of a digital image. A plurality of digital images is filtered based on the image selection parameters to generate a subset of the plurality of digital images, where the subset includes digital images having the specific properties defined by the image selection parameters. Optionally, the digital images included in the subset can be prioritized and/or categorized based on the image selection parameters. Also optionally, digital images that do not have the specific properties defined by the image selection parameters can be excluded. In addition, in one aspect, image view commands can be received and a plurality of views of a particular digital image generated based on the image view commands. These views can then be displayed to a user.

A digital camera having image selection capabilities is disclosed in an additional embodiment of the present invention. The digital camera includes an imaging device in communication with a system bus. The imaging device is capable of capturing image data for a plurality of digital images. Also included is an input/output (I/O) device in communication with the system bus. The I/O device is capable of receiving image selection parameters defining specific properties of a digital image. The digital camera further includes a computer that is in communication with both the imaging device and the I/O device via the system bus. The computer includes logic that filters the plurality of digital images based on the image selection parameters to generate a subset of the plurality of digital images, which includes digital images having the specific properties defined by the image selection parameters. Optionally, the computer can include logic that prioritizes and/or categorizes the digital images included in the subset based on the image selection parameters. Also optionally, the computer can include logic that excludes digital images that do not have the specific properties defined by the image selection parameters. In addition, in one aspect, the I/O device can be further capable of receiving image view commands. In this aspect, the computer can optionally include logic that generates a plurality of views of a particular digital image based on the image view commands. Further, a display device that is capable of displaying the plurality of views to a user can optionally be coupled to the I/O device.

In a further embodiment, a computer program embodied on a computer readable medium for digital image selection is disclosed. The computer program includes a code segment that obtains image selection parameters that define specific properties of a digital image. In addition, a code segment is included that filters a plurality of digital images based on the image selection parameters to generate a subset of the plurality of digital images. As above, the subset includes digital images having the specific properties defined by the image selection parameters.

A further method for digital image selection is disclosed in an additional embodiment of the present invention. As above, image selection parameters are obtained, which define specific properties of a digital image. In addition, object recognition data is obtained from an object recognition database. Using the object recognition data, each digital image of a plurality of digital images is parsed to identify properties of the digital image that correspond to the image selection parameters. Then, a subset of the plurality of digital images is presented. As above, the subset includes digital images having the specific properties corresponding to the image selection parameters.

In this manner, embodiments of the present invention advantageously allow a user to automatically select particular images that satisfy particular requirements without needing to personally review each image stored in memory. In addition, the multiple views advantageously allow the user to manipulate and view particular digital images under various conditions without the effort of purposefully using an image editor. Other aspects and advantages of the invention will become apparent from the following detailed description, taken in conjunction with the accompanying drawings, illustrating by way of example the principles of the invention.

### BRIEF DESCRIPTION OF THE DRAWINGS

The invention, together with further advantages thereof, may best be understood by reference to the following description taken in conjunction with the accompanying drawings in which:
Figure 1A illustrates a traditional camera;
Figure 1B illustrates a digital camera;
Figure 2A is a diagram showing an exemplary digital image selection system 200, in accordance with an embodiment of the present invention;
Figure 2B shows an exemplary digital image selection screen 220, in accordance with an embodiment of the present invention;
Figure 3 is a block diagram showing a digital camera 300 having a computer with digital image selection capabilities, in accordance with an embodiment of the present invention;
Figure 4 is a block diagram showing an exemplary computer, in accordance with an embodiment of the present invention;
Figure 5 is a diagram showing image subset generation based on user parameters, in accordance with an embodiment of the present invention;
Figure 6 is a block diagram showing exemplary user parameters, in accordance with an embodiment of the present invention;
Figure 7 illustrates image categorization using an image filter, in accordance with an embodiment of the present invention;
Figure 8 is a flowchart showing a method for performing digital image selection, in accordance with an embodiment of the present invention;
Figure 9A shows an exemplary computer model for a human face;
Figure 9B is an illustration of a digital image of a human face; and
Figure 10 illustrates object recognition data access, in accordance with an embodiment of the present invention; and
Figure 11 illustrates multiple view image processing, in accordance with an embodiment of the present invention.

### DETAILED DESCRIPTION OF THE PREFERRED EMBODIMENTS

An invention is disclosed for digital image selection and previewing in a digital camera environment. In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to unnecessarily obscure the present invention.

Broadly speaking, embodiments of the present invention take advantage of computer image processing technology to parse digital photographs based on user provided parameters. That is, embodiments of the present invention allow a user to select digital images by providing a plurality of parameters indicating desired image properties. The parameters are utilized to filter the digital images, resulting in a smaller selection of images that share the given properties.

For example, a user can provide an "images in focus" parameter to the system. Embodiments of the present invention then search through the stored digital images to find only those images that are in focus. This set of "in focus" images is presented to the user. In another example, a user can select only images wherein the subject does not have "red eye." Again, the digital images are searched for only those images wherein the subject does not have "red eye," and these images are presented to the user. In addition, multiple parameters can be provided. For example, the images can be searched for images that are both "in focus" with no "red eye."

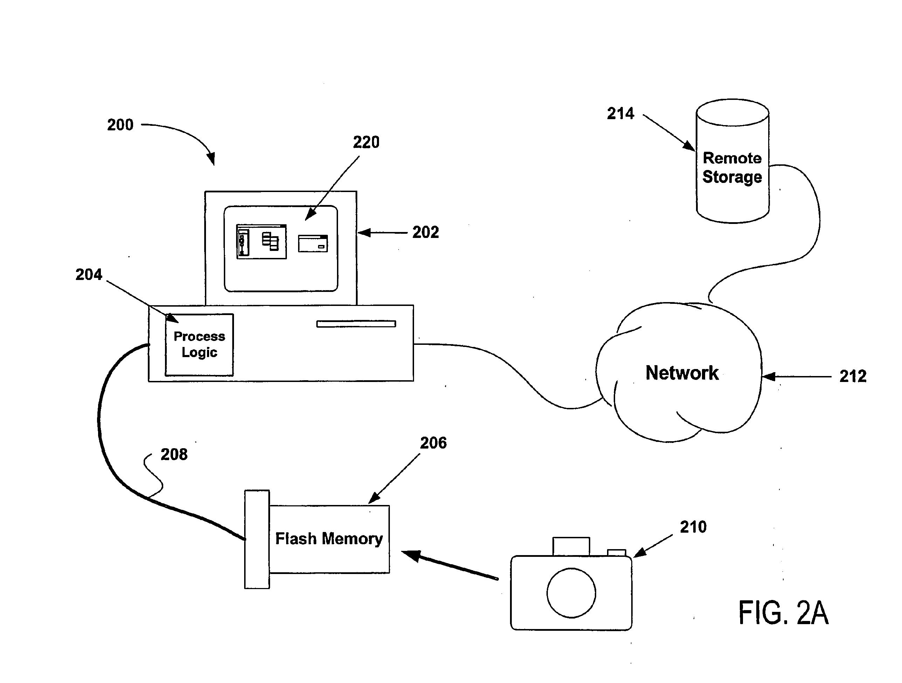

Figure 2A is a diagram showing an exemplary digital image selection system 200, in accordance with an embodiment of the present invention. The digital image selection system 200 includes a computer 202 having process logic 204 for digital image selection. Coupled to the computer 202 via universal serial bus (USB) cable 208 is a flash memory 2 06 from a digital camera 210. Of course, any type of interconnect/data transfer technology can be used, such as IDE, SCSI, FireWire (IEEE 1394), etc. The flash memory 206 stores digital images obtained using the digital camera 210. As mentioned previously, the flash memory 206 can store any number of images, and depending on capacity, can store over one thousand digital images.

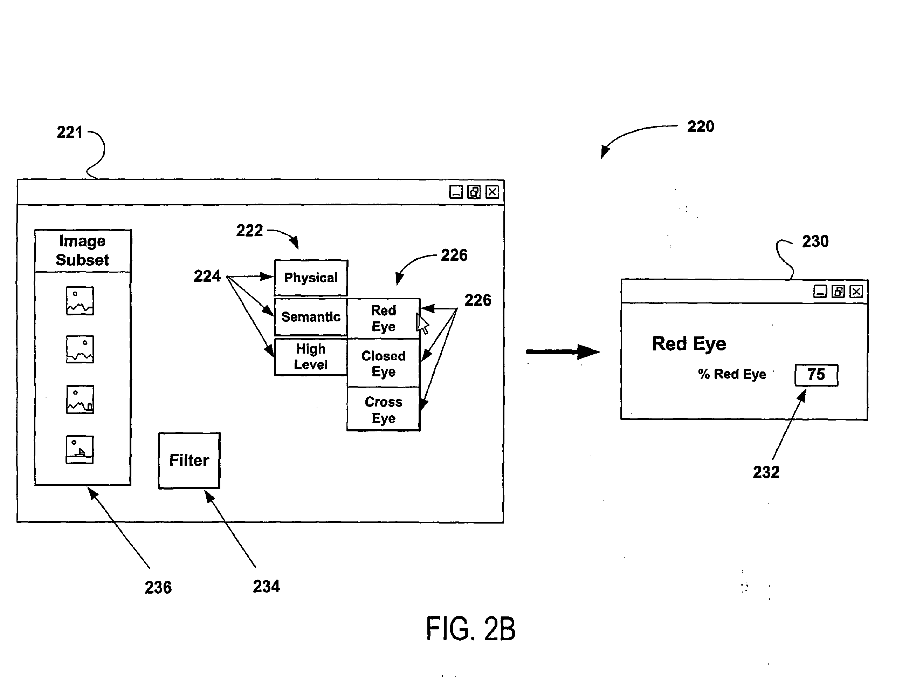

In operation, the digital images stored on the flash memory 206 are downloaded to the computer 202 and optionally stored locally using a persistent storage device, such as a hard drive. In addition to obtaining digital images from the flash memory 206, digital images can be downloaded from a remote storage 214 via network 212, such as a local area network (LAN) or wide area network (WAN), such as the Internet. Once the digital images are obtained, either locally (e.g., local hard drive or removable media) or remotely, a user can interact with the process logic 204 using a digital image selection screen 220. In this manner, the process logic 204 can be utilized to filter and preview the downloaded digital images, as described next with reference to Figure 2B.

Figure 2B shows an exemplary digital image selection screen 220, in accordance with an embodiment of the present invention. In one embodiment, the digital image selection screen 220 includes a main window 221 and one or more sub-windows 226 based on actions taken by the user. The main window 221 generally includes a user parameters menu 222 providing a plurality of parameter categories 224, each providing access to a sub-parameter menu 226. Each sub-parameter menu can provide access to specific image parameters choices 228 selectable by the user, or access to further sub-parameter menus.

Each specific image parameter choice 228 allows the user to configure specific requirements for the particular user parameter. For example, selecting the "red eye" image parameter choice 228 can launch a "red eye" sub-window 230. The "red eye" sub-window 230 can allow the user to enter a specific threshold number 232 indicating, for example, the percentage of red in "red eye" pixels.

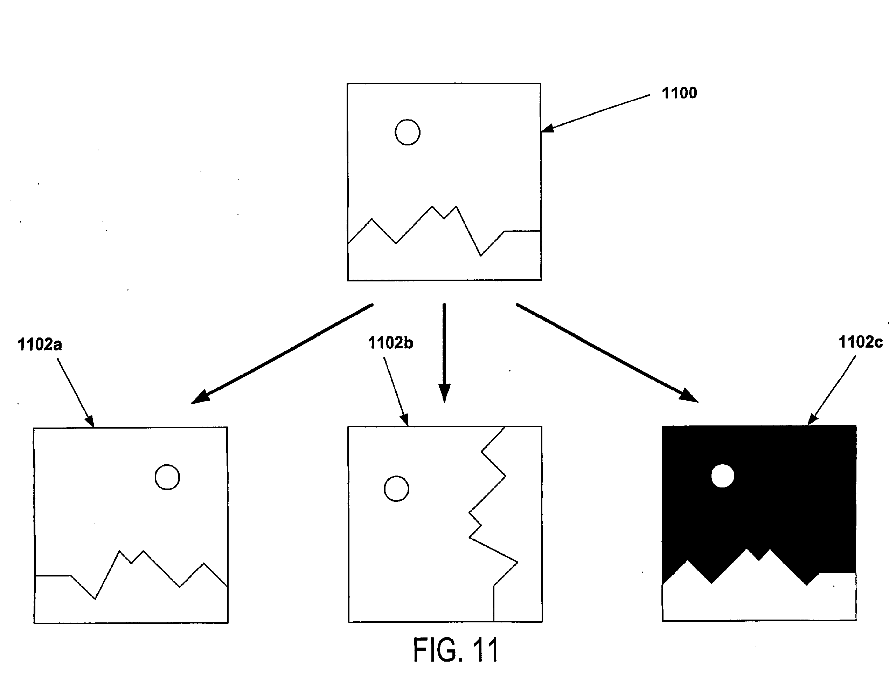

Once the user has defined user parameters for each desired image property, the digital images can be filtered by selecting the filter button 234. The filter button 234 indicates to the computer system that the process logic 204 should filter the digital images using the defined user parameters. Images having properties matching the user defined parameters are then presented to the user in an image subset menu 236. In this manner, embodiments of the present invention allow a user to select digital images by providing a plurality of parameters indicating desired image properties. In addition, embodiments of the present invention allow the user to preview images under various conditions, which is described in greater detail with reference to Figure 11 below.

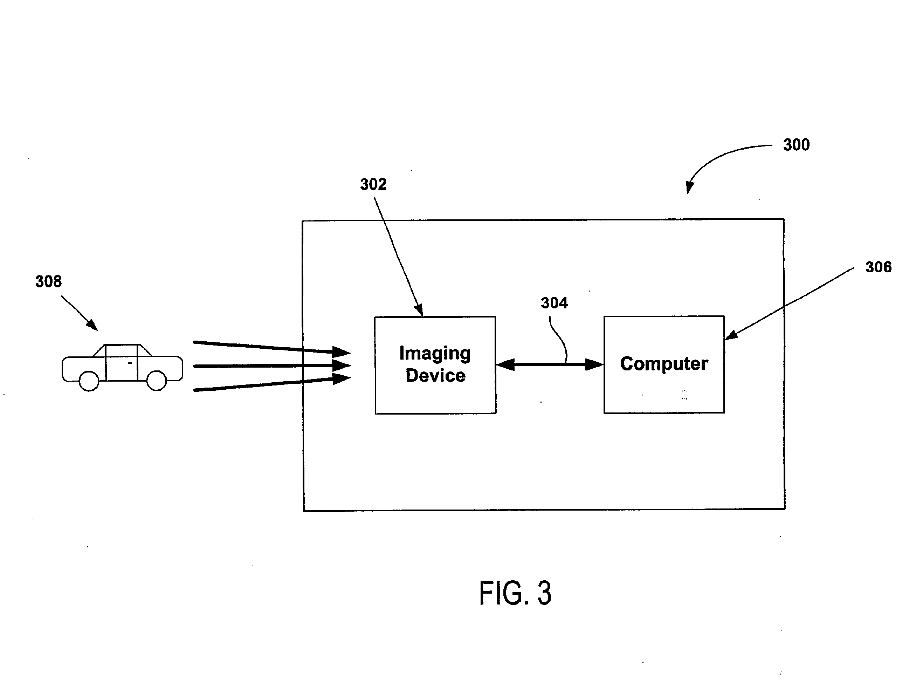

In addition, to using an external computer system to perform digital image selection, embodiments of the present invention can perform image digital image selection within a digital camera. Figure 3 is a block diagram showing a digital camera 300 having a computer with digital image selection capabilities, in accordance with an embodiment of the present invention. The digital camera 300 includes an imaging device 302, a system bus 304 and a computer 306. Imaging device 302 is in optical communication with an object 308 and electrically coupled via system bus 304 to the computer 306. Once a photographer has focused the imaging device 302 on the object 308 and instructed camera 300 to capture an image of object 308, using a capture button for example, the computer 306 commands imaging device 302 via the system bus 304 to capture raw image data that represents the object 308.

The captured raw image data is transferred over the system bus 304 to the computer 306, which stores the captured image data in memory. As will be described in greater detail subsequently, the computer 306 also performs digital image selection and preview based on user provided parameters. The system bus 304 also passes various status and control signals between imaging device 302 and computer 306.

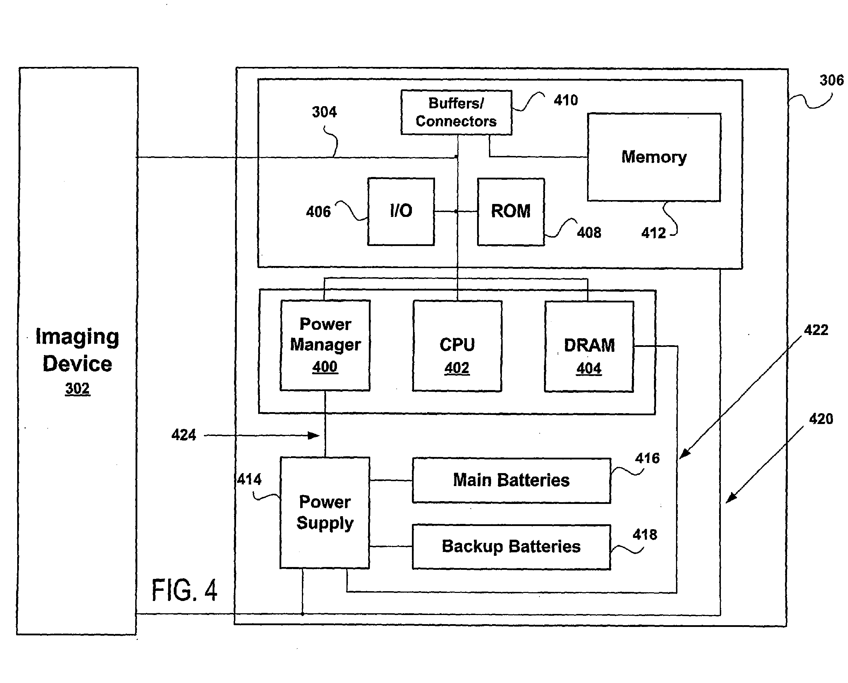

Figure 4 is a block diagram showing an exemplary computer 306, in accordance with an embodiment of the present invention. As shown in Figure 4, the system bus 304 provides connection paths between the imaging device 302, power manager 400, central processing unit (CPU) 402, dynamic random-access memory (DRAM) 404, input/output interface (I/O) 406, read-only memory (ROM) 408, and buffers/connector 410. Generally, removable memory 412 is connected to the system bus 304 via the buffers/connector 410.

The power manager 400 communicates via line 424 with a power supply 414 to coordinate power management operations for camera. The CPU 402 typically includes a processor device for controlling the operation of camera, and is generally capable of concurrently running multiple software routines to control the various processes of camera within a multi-threading environment. The DRAM 404 is a contiguous block of dynamic memory that can be selectively allocated to various storage functions.

The I/O 406 provides an interface device allowing communications to and from computer 306. For example, the I/O 406 can permit an external host computer (not shown) to connect to, and communicate with, the computer 306. The I/O 406 also permits a user to communicate with camera via an external user interface and an external display panel, typically referred to as a view finder. For example, the external user interface can be used to obtain user image selection parameters from the user.

The ROM 408 generally includes a nonvolatile read-only memory that stores a set of computer-readable program instructions to control the operation of camera. The removable memory 412 serves as an additional image data storage area and preferably is a non-volatile device, readily removable and replaceable by a user via the buffers/connector 410. Thus, a user who possesses several removable memories 412 can replace a full removable memory 412 with an empty removable memory 412 to effectively expand the picture-taking capacity of camera. In one embodiment, the removable memory 412 is implemented as flash memory, EEPROM, or the like.

The power supply 414 supplies operating power to the various components of camera. In one embodiment, the power supply 414 provides operating power to a main power bus 420 and to a secondary power bus 422. The main power bus 420 provides power to the imaging device 302, I/O 406, ROM 408 and the removable memory 412. The secondary power bus 422 provides power to the power manager 400, CPU 402 and the DRAM 404.

The power supply 414 is further connected to main batteries 416 and to backup batteries 418. In one embodiment, the power supply 414 can also be connected to an external power source. During normal operation, the main batteries 416 provide operating power to the power supply 416, which then provides the operating power to camera via both main power bus 420 and secondary power bus 422.

During a power failure mode in which the main batteries 416 have failed (when their output voltage has fallen below a minimum operational voltage level) the backup batteries 418 provide operating power to power supply 414, which then provides the operating power only to the secondary power bus 422 of camera. In this manner, selected components of camera (including DRAM 404) are protected against a power failure in main batteries 416.

In one embodiment, the power supply 414 can also includes a flywheel capacitor connected to the power line coming from the main batteries 416. If the main batteries 416 suddenly fail, the flywheel capacitor temporarily maintains the voltage from the main batteries 416 at a sufficient level, such that the computer 306 can protect any image data currently being processed by the camera before shutdown occurs.

According to the embodiments of the present invention, the flexible architecture of the digital camera provides an improved method for manipulating images in a digital camera. More specifically, embodiments of the present invention take advantage of the computer image processing to parse digital photographs based on user provided parameters. That is, embodiments of the present invention allow a user to select digital images by providing a plurality of parameters indicating desired image properties. The parameters a reutilized to filter the digital images, resulting in a smaller selection of images that share the given properties. In addition, embodiments of the present invention can provide multiple views of a particular image, allowing a user to know beforehand what an image will look like under various conditions. In addition, the multiple views allow the user to manipulate the image without the effort of purposefully using an external image editor.

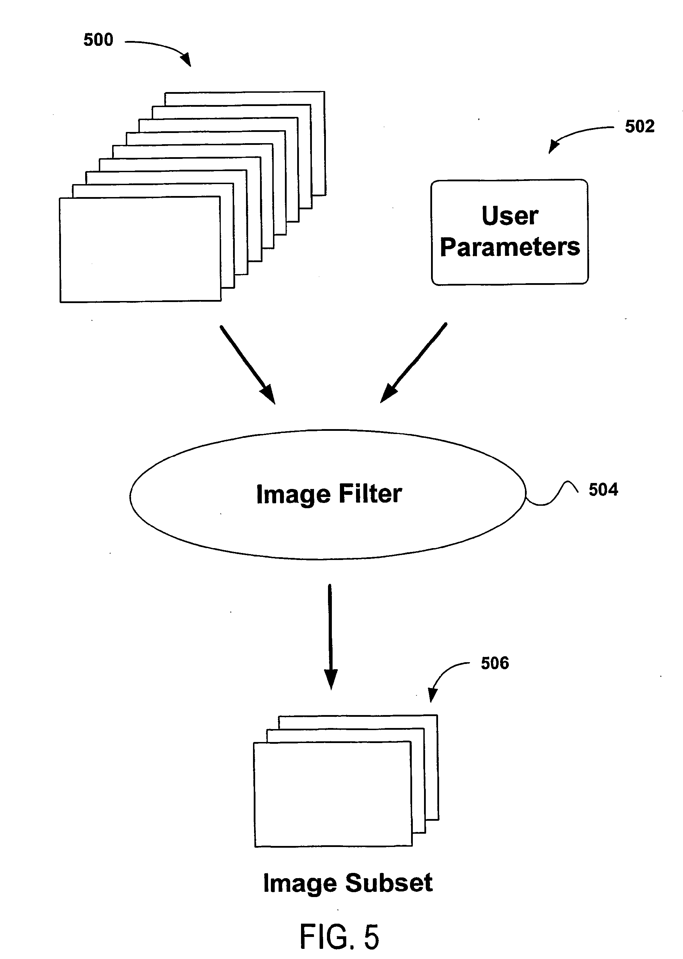

Figure 5 is a diagram showing image subset generation based on user parameters, in accordance with an embodiment of the present invention. As mentioned above, it should be noted that embodiments of the present invention can be used both externally and internally to the digital camera. For example, stored images can be downloaded to an external computer, such as a personal computer, and the embodiments of the present invention can be used to select images using the external computer.

As mentioned above, embodiments of the present invention allow a user to select digital images by providing a plurality of parameters to the camera that indicate desired image properties. As shown in Figure 5, a digital camera of the embodiments of the present invention generally stores a plurality of digital images 500. For example, the digital camera can store about one thousand digital images 500 before needing to replace the removable memory. Using the embodiments of the present invention, an image subset 506 of the plurality of digital images 500 can be generated based on user parameters 502.

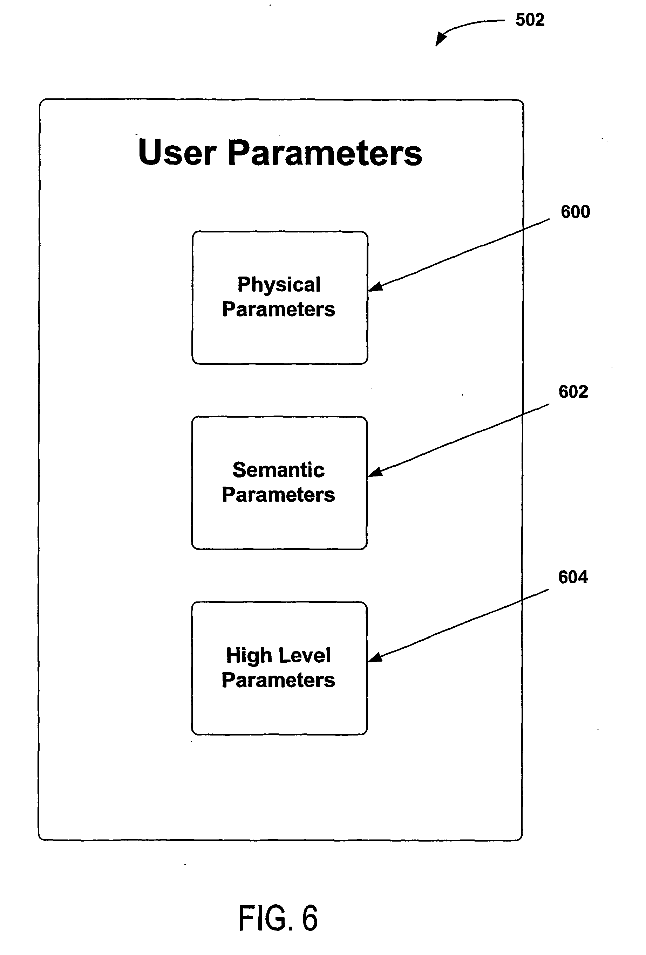

More specifically, in operation, a user provides user parameters 502 to the camera computer that specify the image properties of digital images to be included in the image subset 506. The user parameters 502 include parameters of various levels of detail. Figure 6 is a block diagram showing exemplary user parameters 502, in accordance with an embodiment of the present invention. As shown in Figure 6, user parameters 502 can include physical parameters 600, semantic parameters 602, and high level parameters 604.

Physical parameters 600 define physical properties of the digital images that will be included in the image subset 506. For example, the user can use physical parameters 600 to limit the image subset 506 to include only digital images that have a particular resolution, or that have a specific brightness level. Exemplary physical parameters 600 can include the level of focus, resolution, contrast, brightness, and color spectrum.

Semantic parameters 602 define semantic properties of the digital images that will be included in the image subset 506. That is, semantic parameters 602 allow the user to define salient visual features of the digital images that will be included in the image subset 506. For example, the user can use the semantic parameters 602 to limit the image subset to only

High level parameters 604 define high level properties of the digital images that will be included in the image subset 506. For example, the user can use high level parameters 604 to limit the image subset 506 to include only digital images wherein the subject is smiling. High level parameters 604 can also include particular types of images, for example mountain images, or ocean images. In this case, the user can for example define a particular percentage of the image that should include mountains or ocean.

Referring back to Figure 5, once the user parameters 502 are received, an image filter function 504 is applied to the plurality of digital images 500. The image filter function 504 filters the plurality of digital images 500 based on the received user parameters 502. As a result, the user is presented with an image subset 506 that includes the digital images that satisfy the requirements set forth in the user parameters 502. Moreover, the digital images can be further prioritized within the image subset 506. For example, images that more closely reflect the user parameter data can be listed before images that include less of the user parameter data. In this case, the remainder of the digital images can be either excluded from the image subset 506, or simply placed at the end of the image subset 506.

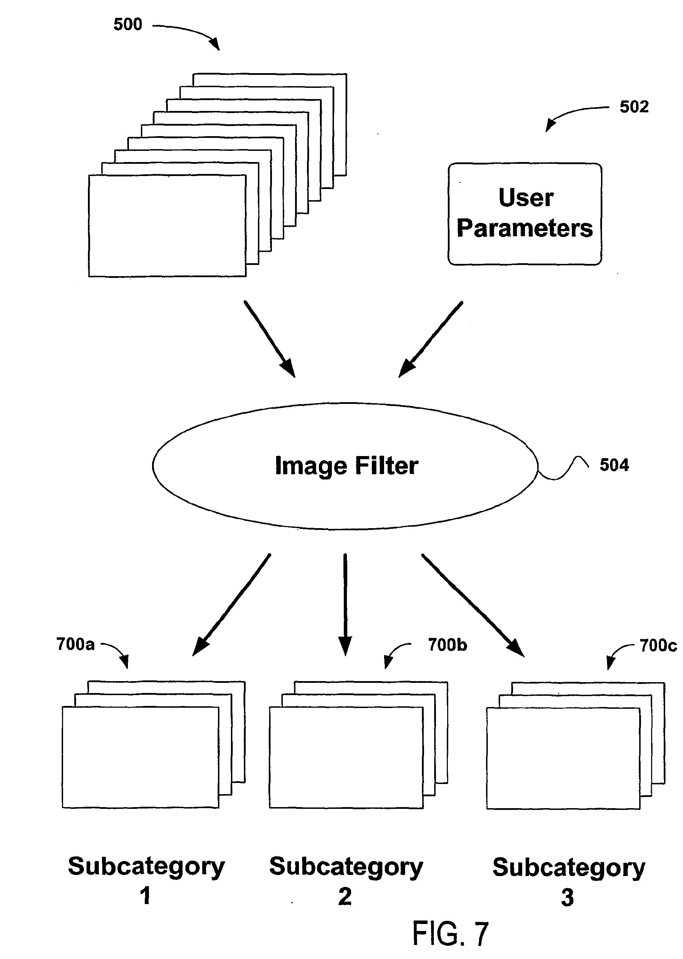

For example, a user can generate a plurality of digital images 500 using the camera, which include mountain images, coastal images, portraits, and group pictures. The user can then filter the digital images 500 by providing a plurality of user parameters 502, which define the properties of the desired digital images. For example, the user can use physical parameters 600 to include only images that are "in focus." In addition, the user can use the semantic parameters 602 to include only images wherein the subject does not have "red eye." Further, the user can use high level parameters 604 to include only images that include 30% ocean scenery. Once these user parameters 502 are defined, the computer can apply the image filter function 504, which filters the plurality of digital images 500 into the image subset 506. In the above example, the image subset 506 would include only images that are in focus, have no "red eye" effect, and have at least 30% ocean scenery in the background. In addition to generating a single image subset 506, embodiments of the present invention can be used to categorize digital images, as discussed next with reference to Figure 7.

Figure 7 illustrates image categorization using an image filter, in accordance with an embodiment of the present invention. As mentioned previously, although embodiments of the present invention will be described in terms of in camera image selection, it should be noted that embodiments of the present invention can also be used external to the digital camera. For example, stored images can be downloaded to an external computer, such as a personal

Figure 7 illustrates image categorization using an image filter, in accordance with an embodiment of the present invention. As mentioned previously, although embodiments of the present invention will be described in terms of in camera image selection, it should be noted that embodiments of the present invention can also be used external to the digital camera. For example, stored images can be downloaded to an external computer, such as a personal computer, and the embodiments of the present invention can be used to select images using the external computer.

As mentioned above, embodiments of the present invention allow a user to select digital images by providing a plurality of parameters indicating desired image properties. As shown in Figure 7, a digital camera of the embodiments of the present invention generally stores a plurality of digital images 500. Similar to generating an image subset, embodiments of the present invention can also categorize the plurality of digital images 500 based on user parameters 502.

As above, a user provides user parameters 502 to the camera computer that specify the image properties of digital images to be included in the image subset 506. Once the user parameters 502 are received, the image filter function 504 is applied to the plurality of digital images 500. In this aspect, the image filter function 504 filters the plurality of digital images 500 based on the received user parameters 502. As a result, the user is presented with a plurality of subcategories 700a-700c. Each subcategory includes the digital images that satisfy the requirements set forth in the user parameters 502 for that particular category. As above, the digital images can be prioritized within each subcategory 700a-700c.

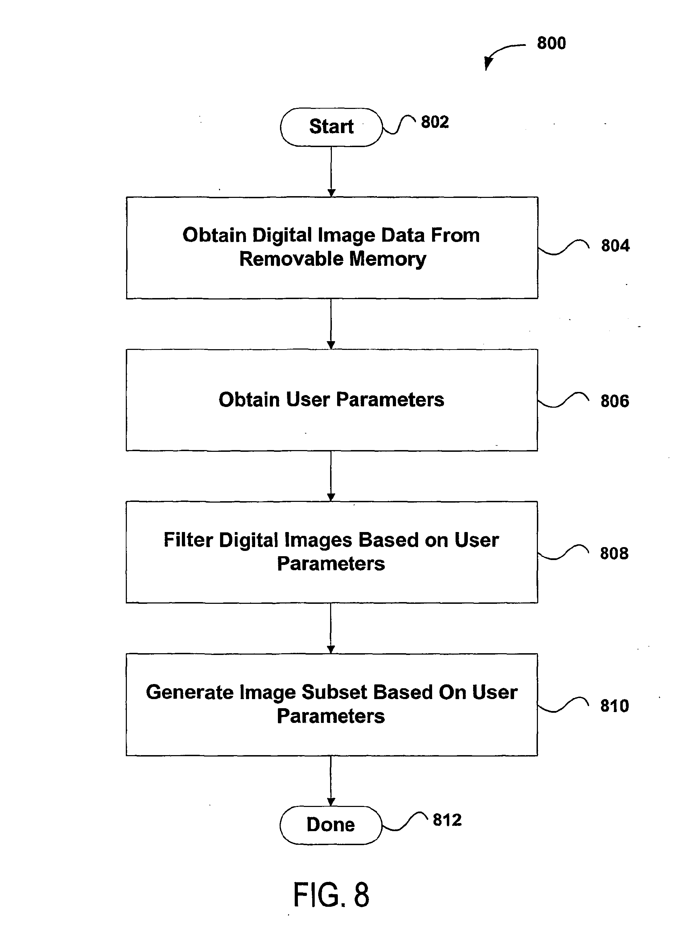

Figure 8 is a flowchart showing a method 800 for performing digital image selection, in accordance with an embodiment of the present invention. In an initial operation 802, preprocess operations are performed. Preprocess operations can include loading the camera with an appropriate removable memory, photographing a plurality of subjects to produce digital images, and other preprocess operations that will be apparent to those skilled in the art after a careful reading of the present disclosure.

In operation 804, digital image data is obtained from the camera's removable memory. As mentioned previously, the camera generally include removable memory coupled to a system bus via the buffers. The removable memory serves as an additional image data storage area and preferably is a non-volatile device, readily removable and replaceable by a user via the buffers. Thus, a user who possesses several removable memories can replace a full obtain the digital image data from any source, such as for example, a computer hard drive, a network connection, or other source that will be apparent to those skilled in the art after a careful reading of the present disclosure.

The user parameters are obtained, in operation 806. As discussed above, the user parameters can include physical parameters, semantic parameters, and high level parameters. Physical parameters define physical properties of the digital images that will be included in the image subset. For example, the user can use physical parameters to limit the image subset to include only digital images that have a particular resolution, or have a specific brightness level. Exemplary physical parameters can include the level of focus, resolution, contrast, brightness, and color spectrum.

Semantic parameters define semantic properties of the digital images that will be included in the image subset. That is, semantic parameters allow the user to define salient visual features of the digital images that will be included in the image subset. For example, the user can use the semantic parameters to limit the image subset to only images wherein the subject does not have "red eye," which generally results from flash photography when the subject has dilated pupils. Other exemplary semantic parameters can include closed eyes, cross-eyed, etc.

High level parameters define high level properties of the digital images that will be included in the image subset. For example, the user can use high level parameters to limit the image subset to include only digital images wherein the subject is smiling. High level parameters can also include particular types of images, for example mountain images, or ocean images. In this case, the user can for example define a particular percentage of the image that should include mountains or ocean.

In operation 808, the digital images are filtered based on the user parameters. Once the user parameters are obtained, an image filter function is applied to the plurality of digital images, which filters the plurality of digital images based on the user parameters obtained in operation 806. More particularly, the image filter function filters out digital images that do not satisfy the requirements defined in the user parameters. For example, the user can use physical parameters to include only images that are "in focus." In addition, the user can use the semantic parameters to include only images wherein the subject does not have "red eye." Further, the user can use high level parameters to include only images that include 30% ocean scenery. Once these user parameters are defined, the computer can apply the image filter operation 806. More particularly, the image filter function filters out digital images that do not satisfy the requirements defined in the user parameters. For example, the user can use physical parameters to include only images that are "in focus." In addition, the user can use the semantic parameters to include only images wherein the subject does not have "read eye." Further, the user can use high level parameters to include only images that include 30% ocean scenery. Once these user parameters are defined, the computer can apply the image filter function, which filters the plurality of digital images into an image subset, described next in operation 810.

An image subset is generated based on the user parameters, in operation 810. As discussed above, the computer applies an image filter function to filter the digital images into an image subset. The image subset includes the images that satisfy the requirements set forth in the user parameters. The remainder of the digital images obtained in operation 804 can be excluded from the image subset. Moreover, the digital images can be further prioritized within the image subset. For example, images that more closely reflect the user parameter data can be listed before images that include less of the user parameter data. In this case, the remainder of the digital images obtained in operation 804 can be either excluded from the image subset, or simply placed at the end of the image subset. Continuing with the above example, the image subset would include only images that are in focus, have no "red eye" effect, and have at least 30% ocean scenery in the background.

Post process operations are performed in operation 812. Post process operations can include further image selection, multiple view image processing (discussed subsequently), and other post process operations that will be apparent to those skilled in the art after a careful reading of the present disclosure. In this manner, embodiments of the present invention advantageously allow a user to automatically select particular images that satisfy particular requirements without needing to personally review each image stored in memory.

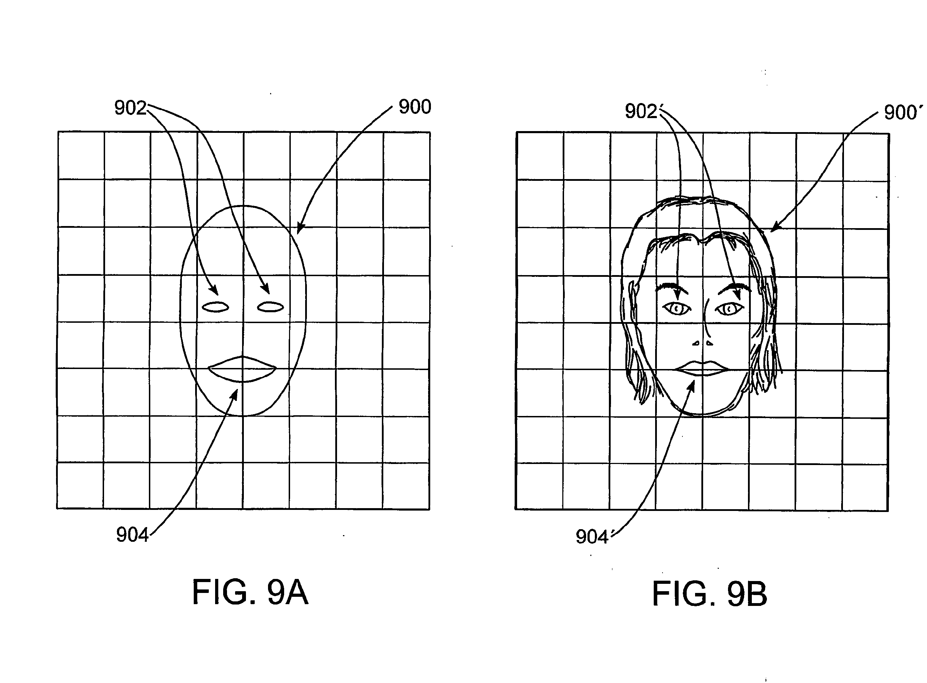

Figures 9A and 9B illustrate an exemplary image filter method based on model comparison, in accordance with an embodiment of the present invention. As mentioned above, embodiments of the present invention apply an image filter to digital images to filter the images based on user parameters. In one embodiment, the image filter uses computer models to facilitate analysis of images. For example, Figure 9A shows an exemplary computer model 900 for a human face. The computer can utilize the computer model 900 to detect human faces in digital images, and to detect facial features within the digital images.

For example, the computer model 900 includes approximate relative locations for eyes 902 and a mouth 904. Thus, when the computer detects a human face in a digital image during an image filter function, the computer can use the relative eye 902 and a mouth 904 locations of the computer model 902 to detect the eyes and mouth of the subject within the digital image.

Figure 9B is an illustration of a digital image of a human face 900'. The human face 900' includes eyes 902' and a mouth 904', which can be located using the relative eye 902 and mouth 904 locations of the computer model 902. For example, the computer can detect the human face 900' by its relative shape as compared to the shape of the computer model head 900. Once detected, the computer can locate the eyes 902' and mouth 904' in the digital image using the relative eye 902 and a mouth 904 locations of the computer model 902. Having detected these locations, the computer can compare the user parameters to the state of the face 900', eyes 902', and mouth 904' of the digital image. For example, when a user parameter is a "red eye" parameter, the computer can determine the color values of the pixels that comprise the eye 902' locations. If the color values include a predetermined amount of red, the computer can determine that the digital image has "red eye." In another example, the pixels of the mouth 904' can be analyzed to determine whether the subject is smiling by comparing the shape of the mouth 904' with the shape of the model mouth 904. In addition to the human face model described above, a plurality of recognition objects can be stored in a database for use in digital image selection.

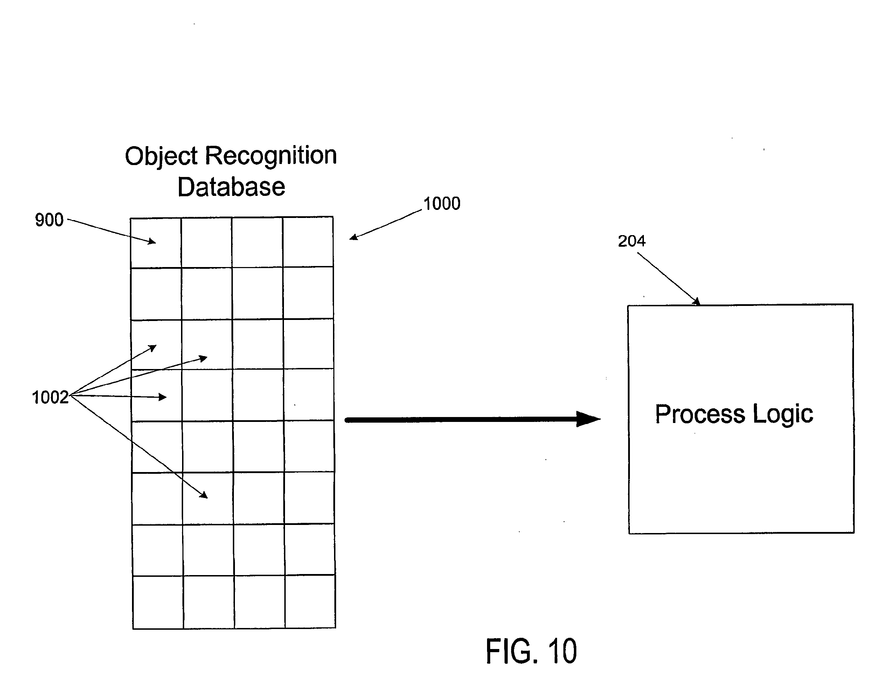

Figure 10 illustrates object recognition data access, in accordance with an embodiment of the present invention. In one embodiment, the process logic 204 obtains recognition data using an object recognition database 1000. The object recognition database 1000 includes a plurality of computer model objects 1002, which can be used by the process logic to recognize objects within digital images to facilitate filtering. F or example, a s mentioned above, one computer model object can be the human face computer model 900. Other computer model objects can include various animals and various body parts, such as arms and legs. Further, computer model objects can be created for different positions of a particular computer model. For example, a computer model object 1000 can be generated for legs when standing, and another for legs when sitting. In addition, computer model objects 1000 can include background models, such as mountain scenery and ocean scenery. In this manner, the process logic 204 can detect the amount of a particular background that is present in a digital image.

For example, a model of a mountain background can be compared to the background of a digital image to determine the amount of mountain background present in the image. Similarly, the edges of elements of the image can be examined to detect the amount of contrast between pixels of the picture elements and that of the background. If the contrast is below a particular threshold, the edges can be determined to be "blurry," and thus, the digital image can be determined to be out of focus.

In addition to providing image selection, embodiments of the present invention further allow users to preview images under various conditions. For example, the user can preview a particular image rotated, to provide the optimal orientation of the photograph, or the user can preview a photograph with a particular filter applied, such as an "inverse" filter. The multiple views advantageously allow the user to manipulate the image without the effort of purposefully using an external image editor.

Figure 11 illustrates multiple view image processing, in accordance with an embodiment of the present invention. As shown in Figure 11, embodiments of the present invention can present multiple views of a particular digital image 1100 to the user. The multiple views can for example include an inverse view 1102a wherein the digital image 1100 is "flipped" 180 degrees, or a rotated view 1102b wherein the digital image 1100 is rotated a predefined number of degrees. As mentioned above, the rotational views can help the user to determine the optimal orientation of the digital image 1100. Other views can include an inverse filter view 1102c wherein the pixels of the digital image 1100 are inversed. Each of these views advantageously allows the user to manipulate and view the digital image 1100 under various conditions without the effort of purposefully using an image editor.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

## Claims

1. A method for digital image selection, **characterised by** the operations of:
obtaining, from a user, image selection parameters (502), the image selection parameters (502) defining specific properties of a digital image, the specific properties including a defined physical parameter (600), a defined semantic parameter (602) and a defined high level parameter (604); and
filtering (504), in response to the image selection parameters being obtained from the user, a plurality of digital images by analysis of captured image data corresponding to the plurality of digital images with respect to the image selection parameters, to generate a subset of the plurality of digital images (506), the subset (506) including digital images having the specific image properties defined by the image selection parameters (502), the image subset (506) being presented to a user, allowing the preview of images containing the defined physical parameter (600), the defined semantic parameter (602) and the defined high level parameter (604).

2. A method as recited in claim 1, further comprising the operation of prioritising the digital images included in the subset based on the image selection parameters.

3. A method as recited in claim 1, further comprising the operation of excluding digital images of the plurality of digital images that do not have the specific properties defined by the image selection parameters.

4. A method as recited in claim 1, further comprising the operation of categorising the plurality of digital images based on the image selection parameters.

5. A method as recited in claim 1, wherein the filtering of the plurality of images may be repeated based on adjusted properties of the digital image, and the repeated filtering may result in a new subset of digital images having adjusted parameters, adjustment being made by receipt of image view commands from the user.

6. A method as recited in claim 5, further comprising the operation of generating a plurality of views of a particular digital image based on the image view commands.

7. A method as recited in claim 6, further comprising the operation of displaying the plurality of views to a user.

8. A digital camera (100) having image selection capabilities, comprising:
an image device (302) in communication with a system bus (304), the image device (302) capable of capturing image data for a plurality of digital images (500), and **characterised by**;
an input/output (I/O) device (406) in communication with the system bus (304), the I/O device (406) capable of receiving image selection parameters (502) from a user, the image selection parameters defining specific properties of a digital image; and
a computer (402) in communication with the imaging device (302) and the I/O device (406) via the system bus (304), the computer (402) having logic (204) that operates in response to reception of the image selection parameters from the user to filter the plurality of digital images (500) by analysis of the captured image data corresponding to the plurality of images with respect to the image selection parameters (502) to generate a subset of the plurality of digital images (506), the subset including digital images having the specific image properties defined by the image selection parameters (502), and the image subset (506) being presented to a user on a screen (221) of the computer to enable a user to preview images identified, by the logic that filters (204), to contain a defined physical parameter (600), a defined semantic parameter (602) and a defined high level parameter (604), the logic that filters (204) being capable of re-filtering the plurality of images (500) based on adjusted specific properties of the digital image, so that the re-filtering can result in a new subset of digital images having the adjusted specific parameters.

9. A digital camera as recited in claim 8, wherein the computer further includes logic that prioritises the digital images included in the subset based on the image selection parameters.

10. A digital camera as recited in claim 8, wherein the computer further includes logic that excludes digital images of the plurality of digital images that do not have the specific properties defined by the image selection parameters.

11. A digital camera as recited in claim 8, wherein the computer further comprises logic that categorises the plurality of digital images based on the image selection parameters.

12. A digital camera as recited in claim 8, wherein the I/O device is further capable of receiving image view commands.

13. A digital camera as recited in claim 8, wherein the computer further includes logic that generates a plurality of views of a particular digital image based on the image view commands.

14. A digital camera as recited in claim 8, further comprising display device coupled to the I/O device, the display device capable of displaying the plurality of views to a user.

15. A computer program embodied on a computer readable medium for digital image selection, **characterised by**:
a code segment that obtains image selection parameters (502) from a user, the image selection parameters (502) defining specific properties of a digital image, the specific properties including a defined physical parameter (600), a defined semantic parameter (602) and a defined high level parameter (604); and
a code segment responsive to the image selection parameters being obtained from the user that filters a plurality of digital images (500) by analysis of captured image data corresponding to the plurality of digital images with respect to the image selection parameters (502) to generate a subset of the plurality of digital images (506), the subset including digital images having the specific image properties defined by the image selection parameters (502), the image subset being presented to a user to enable previewing of images identified by the filtering to contain the defined physical parameter (600), the defined semantic parameter (602) and the defined high level parameter (604), wherein the filtering of the plurality of images can be repeated based on adjusted specific properties of the digital image, so that the repeated filtering will result in a new subset of digital images having the adjusted specific parameters.

16. A computer program as recited in claim 15, further comprising a code segment that prioritises the digital images included in the subset based on the image selection parameters.

17. A computer program as recited in claim 15, further comprising a code segment that excludes digital images of the plurality of digital images that do not have the specific properties defined by the image selection parameters.

18. A computer program as recited in claim 15, further comprising a code segment that categorises the plurality of digital images based on the image selection parameters.

19. A computer program as recited in claim 15, further comprising a code segment that receives image view commands.

20. A computer program as recited in claim 15, further comprising a code segment that generates a plurality of views of a particular digital image based on the image view commands.

## Patentansprüche

1. Verfahren zum Auswählen von digitalen Bildern, **gekennzeichnet durch** die Arbeitsschritte:
Gewinnen von Bildauswahlparametern (502) von einem Benutzer, wobei die Bildauswahlparameter (502) spezifische Eigenschaften eines digitalen Bilds definieren und diese spezifischen Eigenschaften einen definierten physikalischen Parameter (600), einen definierten semantischen Parameter (602) und einen definierten höheren Parameter (604) umfassen, und
Filtern (504) einer Mehrzahl von digitalen Bildern entsprechend den von dem Benutzer gewonnenen Bildauswahlparametern **durch** Analyse von erfassten Bilddaten, die bezüglich der Bildauswahlparameter der Mehrzahl von digitalen Bildern entsprechen, um eine Teilmenge (506) aus der Mehrzahl von digitalen Bildern zu erzeugen, wobei die Teilmenge (506) digitale Bilder umfasst, die die **durch** die Bildauswahlparameter (502) definierten spezifischen Bildeigenschaften haben, wobei die Bildteilmenge (506) einem Benutzer präsentiert wird, wodurch die Vorschau von Bildern ermöglicht wird, die den definierten physikalischen Parameter (600), den definierten semantischen Parameter (602) und den definierten höheren Parameter (604) enthalten.

2. Verfahren nach Anspruch 1, mit dem weiteren Arbeitsschritt, dass die in der genannten Teilmenge enthaltenen digitalen Bilder auf der Basis der Bildauswahlparameter priorisiert werden.

3. Verfahren nach Anspruch 1, mit dem weiteren Arbeitsschritt, dass aus der Mehrzahl von digitalen Bildern digitale Bilder ausgeschlossen werden, die die durch die Bildauswahlparameter definierten spezifischen Eigenschaften nicht besitzen.

4. Verfahren nach Anspruch 1, mit dem weiteren Arbeitsschritt, dass die Mehrzahl von digitalen Bildern auf der Basis der Bildauswahlparameter kategorisiert werden.

5. Verfahren nach Anspruch 1, bei dem die Filterung der Mehrzahl von Bildern auf der Basis von nachgebesserten Eigenschaften des digitalen Bilds wiederholt werden kann und die wiederholte Filterung in einer neuen Teilmenge von digitalen Bildern resultieren kann, die nachgebesserte Parameter besitzen, wobei die Nachbesserung durch das Empfangen von Bildbetrachtungsbefehlen von dem Benutzer durchgeführt wird.

6. Verfahren nach Anspruch 5, mit dem weiteren Arbeitsschritt, dass auf der Basis der Bildbetrachtungsbefehle eine Mehrzahl von Ansichten eines speziellen digitalen Bilds erzeugt wird.

7. Verfahren nach Anspruch 6, mit dem weiteren Arbeitsschritt, dass die Mehrzahl von Ansichten einem Benutzer angezeigt wird.

8. Digitale Kamera (100), die Fähigkeiten zur Bildauswahl besitzt,
mit einer mit einem Systembus (304) verbundenen Abbildungsvorrichtung (302), wobei die Abbildungsvorrichtung (302) Bilddaten für eine Mehrzahl von digitalen Bildern (500) erfassen kann,
**gekennzeichnet durch**
eine mit dem Systembus (304) verbundene Eingabe-/Ausgabe-(I/O)-Vorrichtung, wobei die I/O-Vorrichtung (406) von einem Benutzer Bildauswahlparameter (502) empfangen kann, wobei diese Bildauswahlparameter spezifische Eigenschaften eines digitalen Bilds definieren, und
einen Computer (402), der über den Systembus (304) mit der Abbildungsvorrichtung (302) und mit der I/O-Vorrichtung (406) in Verbindung steht, wobei der Computer (402) eine Logik (204) aufweist, die als Reaktion auf das Empfangen der Bildauswahlparameter von dem Benutzer wirksam wird, um die Mehrzahl von digitalen Bildern (500) **durch** Analyse der erfassten Bilddaten, die bezüglich der Bildauswahlparameter (502) der Mehrzahl von Bildern entsprechen, herauszufiltern und eine Teilmenge (506) der Mehrzahl von digitalen Bildern zu erzeugen, wobei die Teilmenge (506) digitale Bilder umfasst, die die **durch** die Bildauswahlparameter (502) definierten spezifischen Bildeigenschaften haben, und die Bildteilmenge (506) einem Benutzer auf einem Bildschirm (221) des Computers präsentiert wird, um dem Benutzer die Vorschau von Bildern zu ermöglichen, die von der Filterungslogik (204) als solche identifiziert werden, die einen definierten physikalischen Parameter (600), einen definierten semantischen Parameter (602) und einen definierten höheren Parameter (604) enthalten, wobei die Filterungslogik (204) in der Lage ist, die Mehrzahl von Bildern (500) auf der Basis von nachgebesserten spezifischen Eigenschaften des digitalen Bilds neu zu filtern, so dass die Neufilterung in einer neuen Teilmenge von digitalen Bildern resultieren kann, die die nachgebesserten spezifischen Parameter besitzen.

9. Digitale Kamera nach Anspruch 8, bei der der Computer ferner eine Logik enthält, die die in der genannten Teilmenge enthaltenen digitalen Bilder auf der Basis der Bildauswahlparameter priorisiert.

10. Digitale Kamera nach Anspruch 8, bei der der Computer ferner eine Logik enthält, die aus der Mehrzahl von digitalen Bildern digitale Bilder ausschließt, die die durch die Bildauswahlparameter definierten spezifischen Eigenschaften nicht besitzen.

11. Digitale Kamera nach Anspruch 8, bei der der Computer ferner eine Logik enthält, die
die Mehrzahl von digitalen Bildern auf der Basis der Bildauswahlparameter kategorisiert.

12. Digitale Kamera nach Anspruch 8, bei der die I/O-Vorrichtung ferner in der Lage ist, Bildbetrachtungsbefehle zu empfangen.

13. Digitale Kamera nach Anspruch 8, bei der der Computer ferner eine Logik enthält, die auf der Basis der Bildbetrachtungsbefehle eine Mehrzahl von Ansichten eines speziellen digitalen Bilds erzeugt.

14. Digitale Kamera nach Anspruch 8, ferner mit einer mit der I/O-Vorrichtung verbundenen Anzeigevorrichtung, wobei diese Abbildungsvorrichtung einem Benutzer die Mehrzahl von Ansichten anzeigen kann.

15. Auf einem computerlesbaren Medium verkörpertes Computerprogramm zum Auswählen von digitalen Bildern,
**gekennzeichnet durch**
eine Codesegment, das von einem Benutzer Bildauswahlparameter (502) gewinnt, wobei die Bildauswahlparameter (502) spezifische Eigenschaften eines digitalen Bilds definieren und diese spezifischen Eigenschaften einen definierten physikalischen Parameter (600), einen definierten semantischen Parameter (602) und einen definierten höheren Parameter (604) umfassen, und
ein auf die von dem Benutzer gewonnenen Bildauswahlparameter reagierendes Codesegment, das eine Mehrzahl von digitalen Bildern (500) **durch** Analyse der erfassten Bilddaten, die bezüglich der Bildauswahlparameter (502) der Mehrzahl von Bildern entsprechen, herausfiltert, um eine Teilmenge (506) der Mehrzahl von digitalen Bildern zu erzeugen, wobei die Teilmenge (506) digitale Bilder umfasst, die die **durch** die Bildauswahlparameter (502) definierten spezifischen Bildeigenschaften haben, wobei die Bildteilmenge (506) einem Benutzer präsentiert wird, um dem Benutzer die Vorschau von Bildern zu ermöglichen, die **durch** die Filterung als solche identifiziert werden, die den definierten physikalischen Parameter (600), den definierten semantischen Parameter (602) und den definierten höheren Parameter (604) enthalten, wobei die Filterung der Mehrzahl von Bildern (500) auf der Basis von nachgebesserten spezifischen Eigenschaften des digitalen Bilds wiederholt werden kann, so dass die wiederholte Filterung in einer neuen Teilmenge von digitalen Bildern resultiert, die die nachgebesserten spezifischen Parameter besitzen.

16. Computerprogramm nach Anspruch 15, ferner mit einem Codesegment, das die in der genannten Teilmenge enthaltenen digitalen Bilder auf der Basis der Bildauswahlparameter priorisiert.

17. Computerprogramm nach Anspruch 15, ferner mit einem Codesegment, das digitale Bilder ausschließt, die aus der Mehrzahl von digitalen Bildern digitale Bilder ausschließt, die die durch die Bildauswahlparameter definierten spezifischen Eigenschaften nicht besitzen.

18. Computerprogramm nach Anspruch 15, ferner mit einem Codesegment, das die Mehrzahl von digitalen Bildern auf der Basis der Bildauswahlparameter kategorisiert.

19. Computerprogramm nach Anspruch 15, ferner mit einem Codesegment, das Bildbetrachtungsbefehle aufnimmt.

20. Computerprogramm nach Anspruch 15, ferner mit einem Codesegment, auf der Basis der Bildbetrachtungsbefehle eine Mehrzahl von Ansichten eines speziellen digitalen Bilds erzeugt.

## Revendications

1. Procédé de sélection d'image numérique, **caractérisé par** les opérations consistant à :
obtenir, d'un utilisateur, des paramètres de sélection d'image (502), les paramètres de sélection d'image (502) définissant des propriétés spécifiques d'une image numérique, les propriétés spécifiques comprenant un paramètre physique défini (600), un paramètre sémantique défini (602) et un paramètre de haut niveau défini (604) ; et
filtrer (504), en réponse aux paramètres de sélection d'image obtenus de l'utilisateur, une pluralité d'images numériques par l'analyse de données d'image capturées correspondant à la pluralité d'images numériques par rapport aux paramètres de sélection d'image, afin de générer un sous ensemble de la pluralité d'images numériques (506), le sous ensemble (506) comprenant des images numériques ayant les propriétés d'images spécifiques définies par les paramètres de sélection d'image (502), le sous ensemble d'images (506) étant présenté à un utilisateur, permettant la prévisualisation d'images contenant le paramètre physique défini (600), le paramètre sémantique défini (602) et le paramètre de haut niveau défini (604).

2. Procédé selon la revendication 1, comprenant en outre l'opération consistant à établir des priorités dans les images numériques comprises dans le sous ensemble sur la base des paramètres de sélection d'image.

3. Procédé selon la revendication 1, comprenant en outre l'opération consistant à exclure des images numériques de la pluralité d'images numériques qui n'ont pas les propriétés spécifiques définies par les paramètres de sélection d'image.

4. Procédé selon la revendication 1, comprenant en outre l'opération consistant à catégoriser la pluralité d'images numériques sur la base des paramètres de sélection d'image.

5. Procédé selon la revendication 1, dans lequel le filtrage de la pluralité d'images peut être répété sur la base de propriétés ajustées de l'image numérique et le filtrage répété peut résulter en un nouveau sous ensemble d'images numériques ayant des paramètres ajustés, l'ajustement étant effectué par la réception de commandes de visualisation d'image de l'utilisateur.

6. Procédé selon la revendication 5, comprenant en outre l'opération consistant à générer une pluralité de vues d'une image numérique particulière sur la base des commandes de visualisation d'image.

7. Procédé selon la revendication 6, comprenant en outre l'opération consistant à afficher la pluralité de vues pour un utilisateur.

8. Appareil photo numérique (100) ayant des capacités de sélection d'image, comprenant :
un dispositif d'image (302) en communication avec un bus de système (304), le dispositif d'image (302) étant capable de capturer des données d'image pour une pluralité d'images numériques (500) et **caractérisé par** :
un dispositif d'entrée / de sortie (I/O) (406) en communication avec le bus de système (304), le dispositif I/O (406) étant capable de recevoir des paramètres de sélection d'image (502) d'un utilisateur, les paramètres de sélection d'image définissant des propriétés spécifiques d'une image numérique ; et
un ordinateur (402) en communication avec le dispositif de formation d'image (302) et le dispositif I/O (406) par le biais du bus de système (304), l'ordinateur (402) ayant une logique (204) qui fonctionne en réponse à la réception des paramètres de sélection d'image de l'utilisateur afin de filtrer la pluralité d'images numériques (500) par l'analyse des données d'image capturées correspondant à la pluralité d'images par rapport aux paramètres de sélection d'image (502) afin de générer un sous ensemble de la pluralité d'images numériques (506), le sous ensemble comprenant des images numériques ayant les propriétés d'images spécifiques définies par les paramètres de sélection d'image (502) et le sous ensemble d'images (506) étant présenté à un utilisateur sur un écran (221) de l'ordinateur afin de permettre à un utilisateur de pré visualiser des images identifiées, par la logique qui filtre (204), comme contenant un paramètre physique défini (600), un paramètre sémantique défini (602) et un paramètre de haut niveau défini (604), la logique qui filtre (204) étant capable de filtrer de nouveau la pluralité d'images (500) sur la base de propriétés spécifiques ajustées de l'image numérique, de telle sorte que le re-filtrage peut résulter en un nouveau sous ensemble d'images numériques ayant les paramètres spécifiques ajustés.

9. Appareil photo numérique selon la revendication 8, dans lequel l'ordinateur comprend en outre une logique qui établit des priorités dans les images numériques comprises dans le sous ensemble sur la base des paramètres de sélection d'image.

10. Appareil photo numérique selon la revendication 8, dans lequel l'ordinateur comprend en outre une logique qui exclut des images numériques de la pluralité d'images numériques qui n'ont pas les propriétés spécifiques définies par les paramètres de sélection d'image.

11. Appareil photo numérique selon la revendication 8, dans lequel l'ordinateur comprend en outre une logique qui catégorise la pluralité d'images numériques sur la base des paramètres de sélection d'image.

12. Appareil photo numérique selon la revendication 8, dans lequel le dispositif I/O est en outre capable de recevoir des commandes de visualisation d'image.

13. Appareil photo selon la revendication 8, dans lequel l'ordinateur comprend en outre une logique qui génère une pluralité de vues d'une image numérique particulière sur la base des commandes de visualisation d'image.

14. Appareil photo selon la revendication 8, comprenant en outre un dispositif d'affichage couplé au dispositif I/O, le dispositif d'affichage étant capable d'afficher la pluralité de vues à un utilisateur.

15. Programme informatique mis en oeuvre sur un support pouvant être lu par ordinateur pour une sélection d'image numériques, **caractérisé par** :
un segment de code qui obtient des paramètres de sélection d'image (502) d'un utilisateur, les paramètres de sélection d'image (502) définissant des propriétés spécifiques d'une image numérique, les propriétés spécifiques comprenant un paramètre physique défini (600), un paramètre sémantique défini (602) et un paramètre de haut niveau défini (604) ; et
un segment de code sensible aux paramètres de sélection d'image obtenus de l'utilisateur qui filtre une pluralité d'images numériques (500) par l'analyse de données d'image capturées correspondant à la pluralité d'images numériques par rapport aux paramètres de sélection d'image (502) afin de générer un sous ensemble de la pluralité d'images numériques (506), le sous ensemble comprenant des images numériques ayant les propriétés d'image spécifiques définies par les paramètres de sélection d'image (502), le sous ensemble d'images étant présenté à un utilisateur pour permettre la prévisualisation d'images identifiées par le filtrage comme contenant le paramètre physique défini (600), le paramètre sémantique défini (602) et le paramètre de haut niveau défini (604), dans lequel le filtrage de la pluralité d'images peut être répété sur la base des propriétés spécifiques ajustées de l'image numérique, de telle sorte que le filtrage répété résultera en un nouveau sous ensemble d'images numériques ayant les paramètres spécifiques ajustés.

16. Programme informatique selon la revendication 15, comprenant en outre un segment de code qui établit des priorités des images numériques comprises dans le sous ensemble sur la base des paramètres de sélection d'image.

17. Programme informatique selon la revendication 15, comprenant en outre un segment de code qui exclut les images numériques de la pluralité d'images numériques qui n'ont pas les propriétés spécifiques définies par les paramètres de sélection d'image.

18. Programme informatique selon la revendication 15, comprenant en outre un segment de code qui catégorise la pluralité d'images numériques sur la base des paramètres de sélection d'image.

19. Programme informatique selon la revendication 15, comprenant en outre un segment de code qui reçoit des commandes de visualisation d'image.

20. Programme informatique selon la revendication 15, comprenant en outre un segment de code qui génère une pluralité de vues d'une image numérique particulière sur la base des commandes de visualisation d'image.
